# EUROPÄISCHE PATENTSCHRIFT

(11) **EP 2 337 647 B1**
(45) Veröffentlichungstag und Bekanntmachung des Hinweises auf die Patenterteilung: **11.09.2013**
(21) Anmeldenummer: 09780747.3
(22) Anmeldetag: 17.07.2009
(51) Int. Cl.: B23D 49/10, B23Q 9/00

(54) **FÜHRUNGSSCHIENE FÜR EINE HANDWERKZEUGMASCHINE**
GUIDE RAIL FOR A HAND-HELD POWER TOOL
RAIL DE GUIDAGE POUR UNE MACHINE-OUTIL MANUELLE

(30) Priorität: 15.09.2008 DE 102008042084
(43) Veröffentlichungstag der Anmeldung: 29.06.2011
(73) Patentinhaber: Robert Bosch GmbH, 70442 Stuttgart (DE)
(72) Erfinder: LUKAS, Heiner, 70197 Stuttgart (DE); GAIRING, Juergen, 70195 Stuttgart (DE); WEBER, Steffen, 70794 Filderstadt (DE)
(86) Internationale Anmeldenummer: PCT/EP2009/059198
(87) Internationale Veröffentlichungsnummer: WO 2010/028892

(56) Entgegenhaltungen:
- DE-A1- 19 923 642
- DE-A1-102007 021 334

## Beschreibung

Die Erfindung bezieht sich auf eine Führungsschiene für eine Handwerkzeugmaschine nach dem Oberbegriff des Anspruches 1.

### Stand der Technik

In der DE 10 2004 017 420 A1 wird ein Elektrohandwerkzeug beschrieben, das beispielhaft als Handkreissäge, Oberfräse oder Stichsäge ausgebildet ist und dem eine auf das zu bearbeitende Werkstück auflegbare oder aufspannbare Führungsschiene zugeordnet ist, die zur Längenverschiebung des Elektrohandwerkzeugs entlang der Längsachse der Führungsschiene dient. Mithilfe der Führungsschiene soll ein gerader Schnitt ermöglicht werden. In die Führungsschiene ist eine Nut eingebracht, die zur Aufnahme eines mit dem Elektrohandwerkzeug verbundenen Nutensteins vorgesehen ist, der in der Nut gleiten kann. Zur Ausführung von längeren Schnitten kann die Führungsschiene mit einer Verlängerungsschiene verbunden werden. Hierzu weist die Führungsschiene an einer Stirnseite mehrere Aufnahmeöffnungen auf, in die Zapfen eingeschoben werden können, die an der axialen Stirnseite der Verlängerungsschiene angeordnet sind.

Um ein sauberes Schnittbild beim Überfahren der Trennstelle zwischen Führungsschiene und Verlängerungsschiene zu gewährleisten, ist es erforderlich, dass die Haltekräfte zwischen den Schienen in Schienenlängsrichtung groß genug sind, dass ein unbeabsichtigtes Lösen der Schienen trotz des Entlanggleitens des Elektrohandwerkzeugs in der Nut der Schienen vermieden wird.

Aus der DE 199 23 642 A1 ist eine Führungsschiene für eine Handwerkzeugmaschine mit zwei Einzelschienen bekannt, die über eine lösbare Verbindungseinrichtung aneinander arretierbar sind. Die Verbindungseinrichtung umfasst ein Sicherungselement an einer Einzelschiene, das in eine korrespondierende Aufnahme an der zweiten Einzelschiene einführbar ist, wobei das Sicherungselement einen laschenförmigen Abschnitt aufweist, der federnd auslenkbar ist und über den die Rastkraft erzeugt wird. Der Oberbegriff von Anspruch 1 basiert auf diesem Dokument. Offenbarung der Erfindung

Der Erfindung liegt die Aufgabe zugrunde, mit einfachen konstruktiven Maßnahmen eine aus Einzelschienen zusammengesetzte Führungsschiene so auszubilden, dass ein sauberes Schnittbild gewährleistet ist.

Diese Aufgabe wird erfindungsgemäß mit den Merkmalen des Anspruches 1 gelöst. Die Unteransprüche geben zweckmäßige Weiterbildungen an.

Die erfindungsgemäße Führungsschiene dient zur Führung einer Handwerkzeugmaschine, beispielsweise für eine Handkreissäge, eine Oberfräse oder eine Stichsäge, um einen geraden Schnitt im zu bearbeitenden Werkstück beim Sägen sicherzustellen. Um auch längere Schnitte ausführen zu können, besteht die Führungsschiene aus zumindest zwei zusammenzufügenden Einzelschienen, die über eine lösbare Verbindungseinrichtung aneinander arretierbar sind. Die Verbindungseinrichtung umfasst einen Verbindungsriegel an einer Einzelschiene, der zwischen einer Arretierposition und einer Löseposition verstellbar ist. Der Verbindungsriegel ist an der Einzelschiene verstellbar gehalten und führt bei der Überführung von der Arretier- in die Löseposition relativ zu der Einzelschiene eine Bewegung aus. Dem Verbindungsriegel ist ein Arretiergegenstück zugeordnet, welches an der zweiten Einzelschiene angeordnet ist, wobei in der Arretierposition der Verbindungsriegel mit dem Arretiergegenstück verrastet ist.

In der Arretierposition sind die Einzelschienen zumindest in Schienenlängsrichtung, die zugleich die Verschieberichtung der Handwerkzeugmaschine auf der Führungsschiene ist, fest aneinander gehalten, so dass während der Bearbeitung, insbesondere der Relativbewegung der Handwerkzeugmaschine auf der Führungsschiene auftretende Kräfte nicht zu einem Lösen der Verbindung und Auseinanderklaffen der Einzelschienen führen kann. Die Verbindungseinrichtung lässt sich zugleich in einfacher Weise konstruktiv realisieren, da lediglich ein Verbindungsriegel an einer der Einzelschienen erforderlich ist, der mit einem zugeordneten Arretiergegenstück zusammenwirkt. Da der Verbindungsriegel an einer der Einzelschienen gehalten und zugleich gegenüber dieser Einzelschiene eine Relativbewegung durchführen kann, ist eine einfache Handhabung gewährleistet, da der Verbindungsriegel durch manuelle Betätigung zwischen seiner Arretier- und Löseposition verstellbar ist, wobei die Lagerung des Verbindungsriegels an der Einzelschiene eine vereinfachte Handhabung unterstützt.

Gemäß der Erfindung ist vorgesehen, dass der Verbindungsriegel bei der Überführung von der Löse- in die Arretierposition einen Druckpunkt überwindet. Dadurch wird der bedienenden Person ein haptischer Eindruck vermittelt, dass der Verbindungsriegel auch tatsächlich seine Arretierposition erreicht hat und somit die beiden Einzelschienen in ordnungsgemäßer Weise aneinander gehalten sind. Das Erreichen bzw. Überwinden des Druckpunktes wird bei der manuellen Betätigung des Verbindungsriegels gespürt. Zusätzlich oder alternativ zum haptischen Eindruck kann es auch angezeigt sein, die Überwindung des Druckpunktes auf andere Weise sensorisch zu vermitteln, beispielsweise durch das Erzeugen eines Geräusches wie zum Beispiel eines Kickgeräusches. Grundsätzlich ist es auch möglich, ein entsprechendes Geräusch nicht durch das Überwinden eines Druckpunktes, sondern auf andere Art und Weise zu erzeugen, indem beispielsweise im Überführungsweg des Verbindungsriegels von der Löse- in die Arretierposition ein ein Kickgeräusch erzeugendes Bauteil betätigt wird, ohne jedoch wie beim Überwinden eines Druckpunktes ein Ansteigen und ein Abflachen des Kraftaufwandes für die Verstellung des Verbindungsriegels vorsehen zu müssen.

Der Druckpunkt wird beispielsweise dadurch realisiert, dass zwischen dem Verbindungsriegel und dem Arretiergegenstück Kontaktelemente angeordnet sind, die nur während eines kurzen Zeitraumes bei der Überführung in die Arretierposition in Kontakt gelangen, der mit dem Erreichen der Arretierposition wieder aufgehoben ist. Beispielsweise ist das Kontaktelement an einer der Einzelschienen als überstehender Wulst oder Vorsprung oder dergleichen am Verbindungsriegel ausgebildet, der während der Überführungsbewegung in die Arretierposition kurzzeitig in Kontakt mit einem Bauteil an der gegenüberliegenden Einzelschiene gelangt, wobei mit Überwindung des Kontaktes zwischen dem Wulst bzw. Vorsprung und dem zugeordneten Bauteil auch der Druckpunkt überwunden wird.

Die Verbindungseinrichtung umfasst vorzugsweise zusätzlich zum Verbindungsriegel auch ein Steckelement, das in eine zugeordnete Ausnehmung an der gegenüberliegenden Einzelschiene einschiebbar ist und mit dem der Verbindungsriegel zu verriegeln ist. Der Verbindungsriegel ist in dieser Ausführung vorteilhafterweise so an seiner Einzelschiene angeordnet, dass weder in der Löseposition noch in der Arretierposition ein Abschnitt des Verbindungsriegels axial über die Stirnseite der Einzelschiene herausragt. Die Verbindung mit der zweiten Einzelschiene wird dadurch hergestellt, dass der Verbindungsriegel mit dem Steckelement an der anderen Einzelschiene in Verriegelungsposition gelangt. Durch das Einführen des Steckelementes in eine zugeordnete Ausnehmung an der den Verbindungsriegel aufweisenden Einzelschiene ist zugleich in Querrichtung, also quer zur Führungsschienenlängsachse eine formschlüssige Verbindung zwischen den Einzelschienen gewährleistet.

Für eine wirksame und über einen langen Betriebszeitraum sichere Verriegelung sind vorzugsweise der Verbindungsriegel und das Steckelement mit zueinander korrespondierenden Klauen ausgestattet, die in der Arretierposition ineinander greifen, so dass in Schienenlängsrichtung eine formschlüssige Verbindung zwischen Verbindungsriegel und Steckelement erreicht wird. Diese formschlüssige Verbindung wird mit dem Überführen des Verbindungsriegels in die Löseposition wieder aufgehoben, so dass das Steckelement aus der Ausnehmung in der Einzelschiene axial herausgezogen werden kann und die beiden Einzelschienen wieder voneinander gelöst sind.

Gemäß einer weiteren zweckmäßigen Ausführung ist vorgesehen, dass der Verbindungsriegel während der Überführungsbewegung von der Löse- in die Arretierposition die gegenüberliegende Einzelschiene in eine angenäherte Position heranzieht. Dies erfolgt beispielsweise in der Weise, dass ein Bauteil des Verbindungsriegels bereits vor dem Erreichen der Arretierposition in Kontakt mit einem Bauteil an der gegenüberliegenden Einzelschiene gelangt und während der weiteren Überführungsbewegung bis zum Erreichen der Arretierposition die gegenüberliegende Einzelschiene axial heranzieht, bis mit dem Erreichen der Arretierposition auch die maximal angenäherte Position zwischen den Einzelschienen erreicht ist. Technisch lässt sich dies beispielsweise dadurch bewerkstelligen, dass in der Ausführung des Verbindungsriegels und des Arretiergegenstücks mit korrespondierenden Klauen wenigstens eine der Klauen eine abgeschrägte Kontaktfläche aufweist, die, bezogen auf die Schienenlängsachse, einen Winkel größer als Null und kleiner als 90° besitzt. Aufgrund der Schrägstellung der Kontaktfläche gleitet das kontaktierende Bauteil des Verbindungsriegels an der Kontaktfläche entlang und zieht damit die gegenüberliegende Einzelschiene in die angenäherte Arretierposition.

Weitere Vorteile und zweckmäßige Ausführungen sind den weiteren Ansprüchen, der Figurenbeschreibung und den Zeichnungen zu entnehmen. Es zeigen:
- Fig. 1: zwei zu einer gemeinsamen Führungsschiene für eine Handwerkzeugmaschine zusammenzusetzende Einzelschienen, die mittels einer Verbindungseinrichtung aneinander zu arretieren sind, welche zwei Steckelemente an der Stirnseite einer Einzelschiene und zwei Verbindungsriegel an der gegenüberliegenden Einzelschiene umfasst,
- Fig. 2: die Einzelschienen in Seitenansicht, mit einem der Verbindungsriegel in geöffneter Position, in der ein Steckelement an der Stirnseite der anderen Einzelschiene vollständig in eine zugeordnete Ausnehmung der den Verbindungsriegel aufweisenden Einzelschiene einführbar ist,
- Fig. 3: die Verbindungseinrichtung mit Verbindungsriegel und Steckelement kurz vor Erreichen der Arretierposition,
- Fig. 4: Verbindungsriegel und Steckelement in arretierter Position,
- Fig. 5: eine vergrößerte Darstellung der arretierten Verbindungseinrichtung,
- Fig. 6: eine Draufsicht auf den Verbindungsriegel,
- Fig. 7: eine Draufsicht auf eine Einzelschiene mit einem Verbindungsriegel während des Montageprozesses.

In den Figuren sind gleiche Bauteile mit gleichen Bezugszeichen versehen.

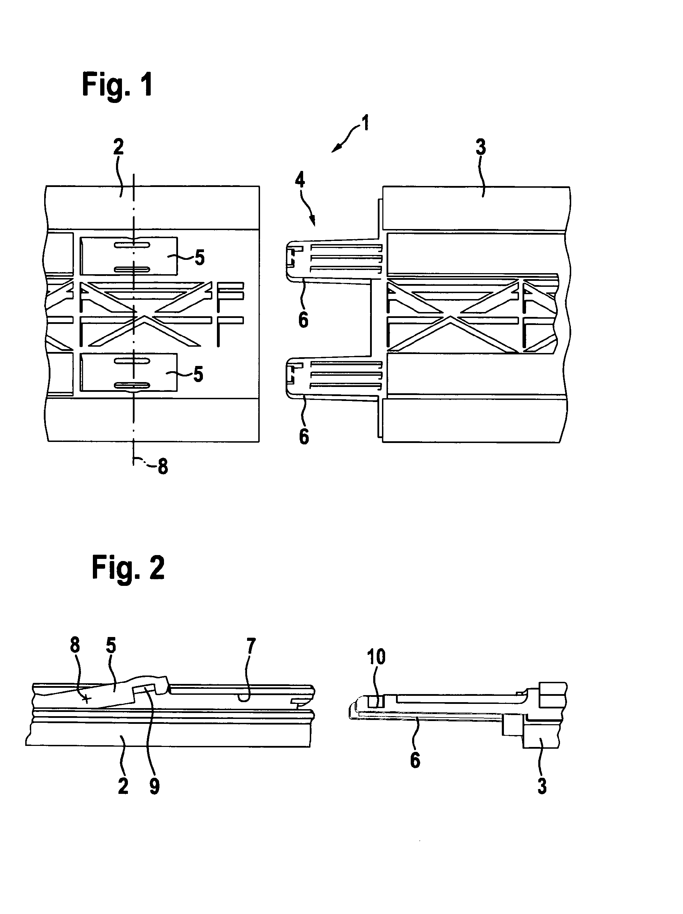

In Fig. 1 ist eine aus zwei Einzelschienen 2 und 3 zusammenzusetzende Führungsschiene 1 dargestellt, die zur Führung einer Handwerkzeugmaschine dient, beispielsweise einer Handkreissäge, einer Oberfräse oder einer Stichsäge. Das Elektrohandwerkzeug wird entlang der Längsachse der Führungsschiene 1 geführt, die auf das zu bearbeitende Werkstück aufgesetzt bzw. mit diesem verbunden wird. Die Führungsschiene ermöglicht einen geraden und sauberen Schnitt durch das zu bearbeitende Werkzeug.

Um verschiedene Längen der Führungsschiene 1 realisieren zu können, ist die Führungsschiene mehrteilig aufgebaut und umfasst mehrere Einzelschienen 2 und 3, die mittels einer Verbindungseinrichtung 4 miteinander zu verbinden sind. Die Einzelschienen 2 und 3 können unterschiedliche Längen aufweisen bzw. es können Einzelschienen unterschiedlicher Länge miteinander kombiniert werden, um auf diese Weise die gewünschte Gesamtlänge einzustellen. Die Verbindungseinrichtung 4 besteht aus Verbindungsriegeln 5, welche mit der ersten Einzelschiene 2 verbunden sind, sowie Steckelementen 6, die fest mit der zweiten Einzelschiene 3 verbunden sind. Im Ausführungsbeispiels sind jeweils zwei Verbindungsriegel 5 parallel und in gleicher axialer Position nebeneinander liegend angeordnet; dementsprechend befinden sich an der Stirnseite der zweiten Einzelschiene 3 zwei Steckelemente 6 in zueinander paralleler Position. Die Steckelemente 6 überragen die Stirnseite der Einzelschiene 3 und sind in Ausnehmungen 7 (Fig. 2) einzuführen, welche sich an der Stirnseite der gegenüberliegenden Einzelschiene 2 befinden und die bis zu dem Verbindungsriegel 5 reichen.

Die Verbindungsriegel 5 sind in der ersten Einzelschiene 2 drehbar gelagert und können um eine quer zur Schienenlängsachse verlaufende Drehachse 8 zwischen einer Löseposition und einer Arretierposition verschwenkt werden. In der Löseposition können die in die Ausnehmung 7 eingeführten Steckelemente 6 axial herausgezogen werden, in der Arretierposition sind die Steckelemente 6 fest mit den Verbindungsriegeln 5 verbunden, so dass ein axiales Entfernen der zweiten Einzelschiene von der ersten Einzelschiene 2 ausgeschlossen ist.

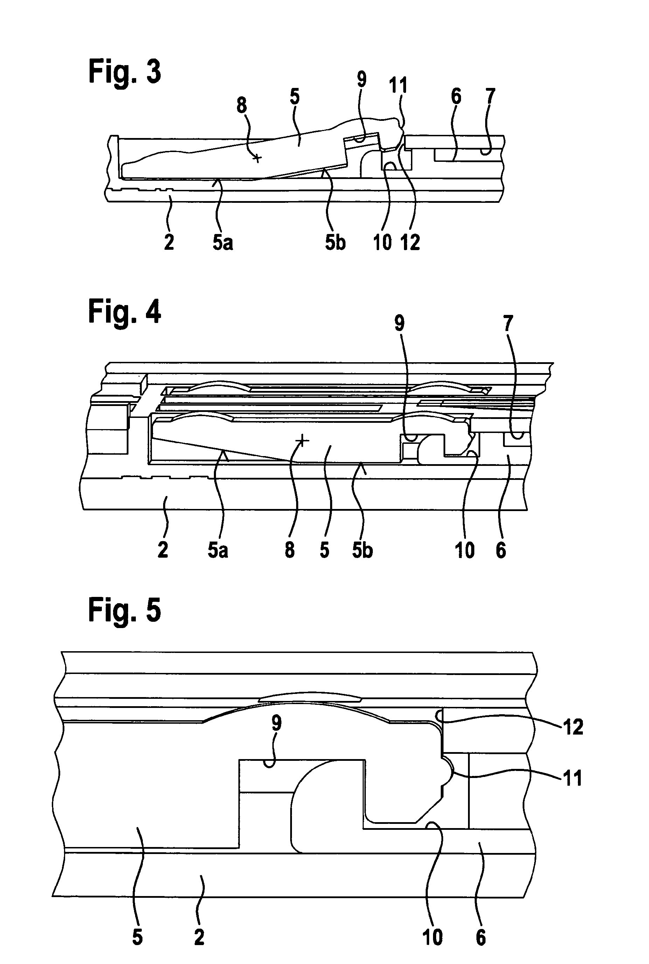

In der Arretierposition bilden der Verbindungsriegel 5 und das zugeordnete Steckelement 6 eine in Schienenlängsrichtung formschlüssige Verbindung. Hierzu sind die einander zugewandten Stirnseiten von Verbindungsriegel 5 und Steckelement 6 jeweils mit einer Klaue 9 bzw. 10 versehen, wobei die Klauen 9 und 10 in der Arretierposition (Fig. 4, 5) sich in einer ineinander greifenden Position befinden. Die Öffnungen der Klauen 9 und 10 befinden sich auf gegenüberliegenden Seiten, so dass ein Ineinandergreifen der Klauen bei einem Verschwenken des Verbindungsriegels ermöglicht ist.

In den Fig. 2 bis 4 ist die Überführungsbewegung zum Erreichen der Arretierposition in verschiedenen Stadien dargestellt. Gemäß Fig. 2 ist das Steckelement 6 an der Stirnseite der Einzelschiene 3 noch nicht in die zugeordnete Ausnehmung 7 in der Einzelschiene 2 eingeführt. Der Verbindungsriegel 5 befindet sich in seiner aufgeschwenkten Position, die zugleich die Löseposition darstellt und in der die stirnseitige Klaue 9 bezogen auf die Ausnehmung 7 sich in einer angehobenen Position befindet.

In Fig. 3 ist das Steckelement 6 in die Ausnehmung 7 in der Einzelschiene 2 eingeführt, und zwar so weit, dass die beiden Einzelschienen sich zumindest annähernd in einer axial maximal angenäherten Position befinden. Der Verbindungsriegel 5 ist noch um seine Drehachse 8 aufgeschwenkt. Bei einem Zuschwenken des Verbindungsriegels 5 können die im Querschnitt U-förmigen Ausnehmungen der Klaue 9 an der Stirnseite des Verbindungsriegels 5 und der Klaue 10 an der Stirnseite des Steckelements 6 in eine formschlüssige Verbindung gebracht werden.

In Fig. 4 ist die Arretierstellung dargestellt, in der die Klauen 9 und 10 am Verbindungsriegel 5 bzw. am Steckelement 6 formschlüssig ineinander greifen, so dass in Längsrichtung der Führungsschiene ein Formschluss gebildet ist.

Die Wandungen an den Klauen 9 und 10 an der Innenseite jeder U-förmigen Ausnehmung der Klaue bilden jeweils Kontaktflächen, die während der Schließbewegung des Verbindungsriegels 5 zum Erreichen der Arretierposition in Radialrichtung aneinander gleiten. Es kann zweckmäßig sein, zumindest eine der Wandungen bzw. Kontaktflächen abgeschrägt auszuführen, so dass diese Wandung, bezogen auf die Führungsschienenlängsachse einen Winkel größer als Null und kleiner als 90° aufweist. Dies hat den Vorteil, dass mit dem Überführen des Verbindungsriegels von der Löse- in die Arretierstellung durch das radiale Aneinandergleiten der Kontaktflächen der Klauen 9 und 10 die zweite Einzelschiene mit dem Steckelement 6 noch näher an die erste Einzelschiene 2 axial herangezogen wird, wobei gegebenenfalls auch eine Verspannung eingestellt werden kann für eine optimale und feste Verbindung zwischen den Einzelschienen.

Um die Dreh- bzw. Schwenkbewegung des Verbindungsriegels 5 um seine Drehachse 8 innerhalb seiner Position in der Einzelschiene 2 zu ermöglichen bzw. zu erleichtern, ist die Unterseite des Verbindungsriegels 5 mit zwei zueinander winklig angeordneten Auflageflächen 5a und 5b versehen, wobei die axiale Position der Drehachse 8 mit dem Übergang zwischen den beiden zueinander winklig angeordneten Auflageflächen 5a und 5b zusammenfällt. In der geöffneten Position des Verbindungsriegels 5 (Fig. 3) liegt die Auflagefläche 5a flächig am Boden des Aufnahmeraumes zur Aufnahme des Verbindungsriegels 5 in der Einzelschiene 2 an. In der geschlossenen bzw. Arretierposition (Fig. 4) liegt dagegen die zweite, der stirnseitigen Klaue 9 benachbarte Auflagefläche 5b flächig am Boden des Aufnahmeraumes zur Aufnahme des Verbindungsriegels an. Damit wird ein Kippen des Verbindungsriegels 5 um die Drehachse 8 mit jeweils flächiger Auflage der Auflagefläche erreicht. Sowohl die geöffnete Lage als auch die geschlossene Lage des Verbindungsriegels 5 ist dadurch verhältnismäßig stabil ausgeführt.

Wie der vergrößerten Darstellung nach Fig. 5 zu entnehmen, ist an der axialen Stirnseite der Klaue 9 am Verbindungsriegel 5 ein Vorsprung bzw. Wulst 11 angeordnet, der beim Überführen des Verbindungsriegels 5 von der geöffneten in die geschlossene Position an einer Stirnkante 12 eines zur Einzelschiene 2 gehörenden Elementes mit Kontakt vorbeigeführt wird. Sowohl in der geöffneten Position des Verbindungsriegels 5 als auch in der geschlossenen Position ist ein direkter Kontakt zwischen dem Wulst 11 und der Stirnkante 12 vermieden. Der Kontakt wird lediglich in einer zwischenliegenden Position während der Überführung zwischen geöffneter und geschlossenen Position erreicht. Während des Kontaktes zwischen dem Wulst 11 und der Stirnkante 12 ist aufgrund der erhöhten Reibung ein Druckpunkt erreicht, zu dessen Überwindung der Verbindungsriegel 5 mit erhöhter Kraft bzw. einem erhöhten Moment betätigt werden muss. Dieser Druckpunkt wird von der Bedienperson haptisch gespürt, außerdem wird zumindest mit dem Aufheben des Druckpunktes mit dem Erreichen der geschlossenen bzw. Arretierposition auch ein Klickgeräusch erzeugt, das von der Bedienperson wahrgenommen wird. Die haptische bzw. akustische Wahrnehmung des Überschreitens des Druckpunktes zeigt der Bedienperson an, dass die Arretierposition zwischen den Einzelschienen mit Erfolg hergestellt ist.

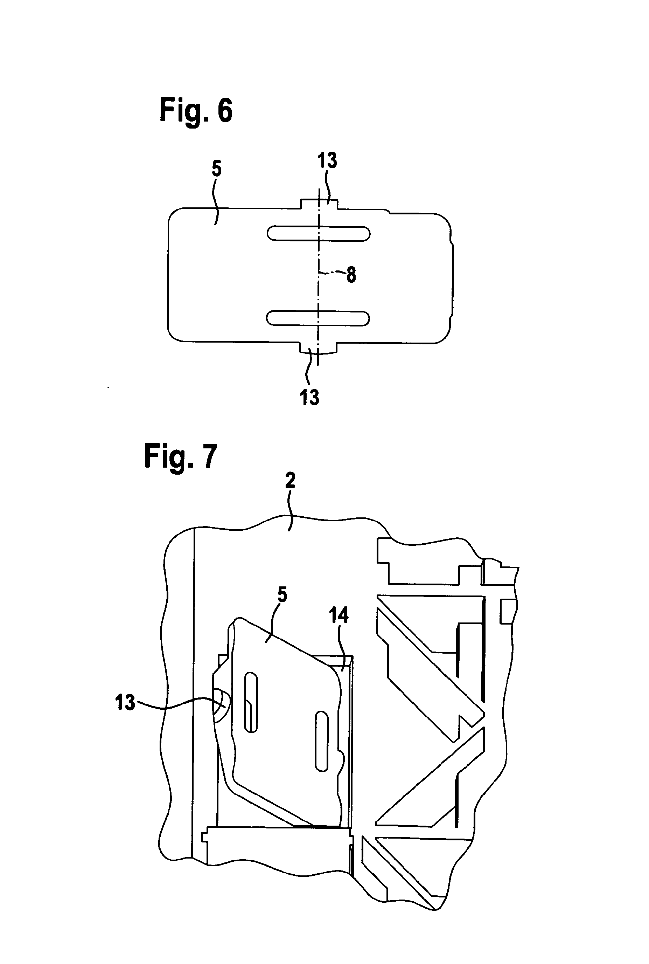

Wie den Fig. 6 und 7 zu entnehmen, ist die Verdrehmöglichkeit des Verbindungsriegels 5 bezogen auf die Einzelschiene 2 dadurch gegeben, dass seitlich am Verbindungsriegel 5 an jeweils gegenüberliegenden Seiten je ein Vorsprung 13 ausgebildet ist, der in der montierten Position in eine zugeordnete Ausnehmung in der Einzelschiene 2 einragt, wodurch die Kipp- bzw. Drehbewegung um die Drehachse 8 des Verbindungsriegels 5 ermöglicht wird. Der Verbindungsriegel 5 ist hierbei in einen Aufnahmeraum 14 eingesetzt, der in die Einzelschiene 2 eingebracht ist.

## Patentansprüche

1. Führungsschiene für eine Handwerkzeugmaschine, insbesondere für eine Handkreissäge, Oberfräse oder Stichsäge, mit mindestens zwei zu einer gemeinsamen Schiene zusammenzufügenden Einzelschienen (2, 3), die über eine lösbare Verbindungseinrichtung (4) aneinander arretierbar sind,
wobei die Verbindungseinrichtung (4) mindestens einen Verbindungsriegel (5) an einer Einzelschiene (2, 3) umfasst, der zwischen einer Arretierposition und einer Löseposition zu verstellen ist, wobei der Verbindungsriegel (5) zur Überführung von der Arretier- in die Löseposition eine Relativbewegung gegenüber der Einzelschiene (2, 3) ausübt, an der der Verbindungsriegel (5) gehalten ist, wobei der Verbindungsriegel (5) in der Arretierposition mit einem an der zweiten Einzelschiene (3) angeordneten Arretiergegenstück (6) verrastet ist, **dadurch gekennzeichnet, dass** der Verbindungsriegel (5) bei der Überführung von der Löse- in die Arretierposition einen Druckpunkt überwindet.

2. Führungsschiene nach Anspruch 1,
**dadurch gekennzeichnet, dass** der Druckpunkt dadurch realisiert ist, dass am Verbindungsriegel (5) ein Kontaktelement (11) angeordnet ist, das bei der Überführung in die Arretierposition kurzzeitig in Kontakt mit einem weiteren Kontaktelement gelangt, wobei der Kontakt mit dem Erreichen der Arretierposition wieder aufgehoben ist.

3. Führungsschiene nach Anspruch 2,
**dadurch gekennzeichnet, dass** ein Kontaktelement als ein überstehender Wulst (11) am Verbindungsriegel (5) ausgebildet ist.

4. Führungsschiene nach einem der Ansprüche 1 bis 3,
**dadurch gekennzeichnet, dass** die Verbindungseinrichtung (4) mindestens ein Steckelement (6) umfasst, das in eine Ausnehmung (7) in der den Verbindungsriegel (5) aufweisenden Einzelschiene (2, 3) einschiebbar ist, wobei der Verbindungsriegel (5) in der Arretierposition mit dem Steckelement (6) verriegelt ist.

5. Führungsschiene nach Anspruch 4,
**dadurch gekennzeichnet, dass** der Verbindungsriegel (5) und das Steckelement (6) zueinander korrespondierende Klauen (9, 10) aufweisen, die in der Arretierposition ineinander greifen.

6. Führungsschiene nach einem der Ansprüche 1 bis 5,
**dadurch gekennzeichnet, dass** der Verbindungsriegel (5) während der Überführungsbewegung von der Löse- in die Arretierposition die zweite Einzelschiene (3) in eine an die erste Einzelschiene (2) angenäherte Position heranzieht.

7. Führungsschiene nach Anspruch 5 und 6,
**dadurch gekennzeichnet, dass** wenigstens eine Klaue (9, 10) eine abgeschrägte Kontaktfläche aufweist, die gegenüber der Schienenlängsachse einen Winkel größer als Null und kleiner als 90° aufweist.

8. Führungsschiene nach einem der Ansprüche 1 bis 7,
**dadurch gekennzeichnet, dass** der Verbindungsriegel (5) bei der Überführung von der Löse- in die Arretierposition ein Klickgeräusch erzeugt.

9. Führungsschiene nach einem der Ansprüche 1 bis 8,
**dadurch gekennzeichnet, dass** zwei parallel zueinander angeordnete Verbindungsriegel (5) vorgesehen sind, denen zwei parallel zueinander angeordnete Arretiergegenstücke zugeordnet sind.

10. Handwerkzeugmaschine, insbesondere Handkreissäge, Oberfräse oder Stichsäge, mit einer Führungsschiene (1) nach einem der Ansprüche 1 bis 9.

## Claims

1. Guide rail for a portable power tool, in particular for a portable circular saw, router or jigsaw, comprising at least two individual rails (2, 3) which are to be joined together to form a common rail and which can be locked together via a releasable connecting device (4), wherein the connecting device (4) comprises at least one connecting latch (5) on an individual rail (2, 3), which connecting latch (5) is to be adjusted between a locking position and a release position, wherein the connecting latch (5), for shifting from the locking position into the release position, performs a movement relative to the individual rail (2, 3) on which the connecting latch (5) is held, wherein the connecting latch (5) is engaged in the locking position with a locking counterpart (6) arranged on the second individual rail (3), **characterized in that** the connecting latch (5) overcomes a pressure point when being shifted from the release position into the locking position.

2. Guide rail according to Claim 1, **characterized in that** the pressure point is realized by a contact element (11) being arranged on the connecting latch (5), said contact element (11), during the shifting into the locking position, briefly coming into contact with another contact element, the contact being neutralized again when the locking position is reached.

3. Guide rail according to Claim 2, **characterized in that** one contact element is formed as a protruding bead (11) on the connecting latch (5).

4. Guide rail according to one of Claims 1 to 3, **characterized in that** the connecting device (4) comprises at least one push-in element (6) which can be pushed into a recess (7) in the individual rail (2, 3) having the connecting latch (5), the connecting latch (5) being locked in the locking position with the push-in element (6).

5. Guide rail according to Claim 4, **characterized in that** the connecting latch (5) and the push-in element (6) have claws (9, 10) which correspond to one another and which interlock in the locking position.

6. Guide rail according to one of Claims 1 to 5, **characterized in that** the connecting latch (5), during the shifting movement from the release position into the locking position, pulls the second individual rail (3) into a position in which it is brought close to the first individual rail (2).

7. Guide rail according to Claims 5 and 6, **characterized in that** at least one claw (9, 10) has a slanted contact surface which is at an angle of greater than zero and less than 90° to the rail longitudinal axis.

8. Guide rail according to one of Claims 1 to 7, **characterized in that** the connecting latch (5) generates a clicking noise when being shifted from the release position into the locking position.

9. Guide rail according to one of Claims 1 to 8, **characterized in that** two connecting latches (5) arranged parallel to one another are provided, two locking counterparts which are arranged parallel to one another being assigned to said connecting latches (5).

10. Portable power tool, in particular a portable circular saw, router or jigsaw, comprising a guide rail (1) according to one of Claims 1 to 9.

## Revendications

1. Rail de guidage pour une machine-outil manuelle, en particulier pour une scie circulaire manuelle, une défonceuse ou une scie sauteuse, comprenant au moins deux rails individuels (2, 3) devant être assemblés pour former un rail commun, qui peuvent être bloqués l'un contre l'autre par le biais d'un dispositif de liaison desserrable (4), le dispositif de liaison (4) comprenant au moins un verrou de liaison (5) sur un rail individuel (2, 3), lequel doit être déplacé entre une position de blocage et une position de libération, le verrou de liaison (5), pour passer de la position de blocage à la position de libération, exerçant un mouvement relatif par rapport au rail individuel (2, 3) sur lequel est retenu le verrou de liaison (5), le verrou de liaison (5) étant encliqueté dans la position de blocage avec une pièce de blocage conjuguée (6) disposée sur le deuxième rail individuel (3), **caractérisé en ce que** le verrou de liaison (5), lors du passage de la position de libération dans la position de blocage, surmonte un point de pression.

2. Rail de guidage selon la revendication 1, **caractérisé en ce que** le point de pression est réalisé par le fait qu'un élément de contact (11) est disposé sur le verrou de liaison (5), lequel élément de contact arrive brièvement en contact avec un élément de contact supplémentaire lors du passage dans la position de blocage, le contact étant à nouveau supprimé une fois la position de blocage atteinte.

3. Rail de guidage selon la revendication 2,
**caractérisé en ce qu'**un élément de contact est réalisé sous forme de bourrelet saillant (11) sur le verrou de liaison (5).

4. Rail de guidage selon l'une quelconque des revendications 1 à 3,
**caractérisé en ce que** le dispositif de liaison (4) comprend au moins un élément enfichable (6) qui peut être enfoncé dans un évidement (7) dans le rail individuel (2, 3) présentant le verrou de liaison (5), le verrou de liaison (5) étant verrouillé dans la position de blocage avec l'élément enfichable (6).

5. Rail de guidage selon la revendication 4,
**caractérisé en ce que** le verrou de liaison (5) et l'élément enfichable (6) présentent des griffes (9, 10) se correspondant mutuellement, qui viennent en prise l'une dans l'autre dans la position de blocage.

6. Rail de guidage selon l'une quelconque des revendications 1 à 5, **caractérisé en ce que** le verrou de liaison (5) attire le deuxième rail individuel (3) dans une position rapprochée du premier rail individuel (2) pendant le mouvement de passage de la position de libération dans la position de blocage.

7. Rail de guidage selon les revendications 5 et 6,
**caractérisé en ce qu'**au moins une griffe (9, 10) présente une surface de contact biseautée, qui présente, par rapport à l'axe longitudinal du rail, un angle supérieur à zéro et inférieur à 90°.

8. Rail de guidage selon l'une quelconque des revendications 1 à 7,
**caractérisé en ce que** le verrou de liaison (5) produit un bruit d'encliquetage lors du passage de la position de libération dans la position de blocage.

9. Rail de guidage selon l'une quelconque des revendications 1 à 8,
**caractérisé en ce que** deux verrous de liaison (5) disposés parallèlement l'un à l'autre sont prévus, auxquels sont associées deux pièces de blocage conjuguées disposées parallèlement l'une à l'autre.

10. Machine-outil manuelle, en particulier scie circulaire manuelle, défonceuse ou scie sauteuse, comprenant un rail de guidage (1) selon l'une quelconque des revendications 1 à 9.
